# EUROPÄISCHE PATENTSCHRIFT

(11) **EP 3 244 172 B1**
(45) Veröffentlichungstag und Bekanntmachung des Hinweises auf die Patenterteilung: **25.03.2020**
(21) Anmeldenummer: 17165780.2
(22) Anmeldetag: 10.04.2017
(51) Int. Cl.: G01F 1/66, G10K 9/122, B06B 1/06

(54) **ULTRASCHALLWANDLER MIT ABSTRAHLELEMENT**
ULTRASONIC TRANSDUCER WITH SPREADER ELEMENT
TRANSDUCTEUR ULTRASONIQUE COMPRENANT UN ÉLÉMENT RAYONNANT

(30) Priorität: 22.04.2016 DE 102016107471
(43) Veröffentlichungstag der Anmeldung: 15.11.2017
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patent- und Rechtsanwälte

(56) Entgegenhaltungen:
- WO-A1-2014/202333
- WO-A1-2016/066343
- WO-A1-2017/029078
- JP-A- H06 253 396
- US-A- 3 891 869

## Beschreibung

Die Erfindung betrifft einen Ultraschallwandler für ein Ultraschalldurchflussmessgerät, mit einem Wandlergehäuse, mit einem Wandlerelement zur Erzeugung und/oder zum Empfangen von Ultraschallsignalen und mit einem Abstrahlelement, wobei das Abstrahlelement von dem Wandlerelement zumindest mittelbar mit Ultraschallsignalen beaufschlagt wird und die Ultraschallsignale über eine Stirnfläche an einer Stirnseite des Abstrahlelements in die an den Ultraschallwandler grenzende Umgebung abstrahlt und/oder das Abstrahlelement Ultraschallsignale über eine Stirnfläche an einer Stirnseite des Abstrahlelements aus der Umgebung aufnimmt und zumindest mittelbar auf das Wandlerelement überträgt.

Ultraschallwandler der in Rede stehenden Art sind seit Langem aus dem Stand der Technik bekannt. Derartige Ultraschallwandler werden beispielsweise zur Entfernungs- oder auch zur Durchflussmessung eingesetzt. Durchflussmessungen beruhen häufig auf dem Dopplereffekt oder auf einer Laufzeitdifferenzmessung.

Abhängig vom Aggregatzustand des Übertragungsmediums können verschiedene Frequenzen des akustischen Signals im Ultraschallbereich besonders vorteilhaft sein. Das hängt zum Beispiel mit der von dem Aggregatzustand des Mediums abhängigen Dämpfung der Ultraschallsignale zusammen. In gasförmigen Medien werden gerne Ultraschallsignale niedrigerer Frequenz als in flüssigen Medien verwendet, da niederfrequente Ultraschallsignale in gasförmigen Medien weniger gedämpft werden als höherfrequente Signale.

Die Frequenz der zu emittierenden oder zu empfangenden Ultraschallsignale wirkt sich auch auf die Abmessungen des Ultraschallwandlers aus. Es ist einleuchtend, dass Ultraschallwandler mechanisch so ausgelegt werden, dass die mechanisch schwingfähigen und zur Signalabstrahlung bzw. -einkopplung gedachten Bauelemente - insbesondere das Abstrahlelement - bei der gewünschten Ultraschallfrequenz möglichst im Bereich der Eigenfrequenz eines Schwingungsmodus arbeiten. Mit niedrigeren Frequenzen arbeitende Ultraschallwandler haben demzufolge in der Regel größere Abmessungen als mit höheren Frequenzen arbeitende Ultraschallwandler. Insgesamt besteht ein Auslegungsziel jedoch darin, möglichst platzsparende mechanische Konstruktionen zu realisieren.

Es ist in vielen Fällen ebenfalls wünschenswert, dass das ins Medium ausgestrahlte Ultraschallsignal von dem Ultraschallwandler möglichst gezielt abgestrahlt wird, der Ultraschallwandler also eine möglichst große Richtwirkung aufweist. Vorzugsweise sollte die Signalleistung in einem kleinen Raumwinkel keulenartig abgestrahlt werden, wobei Nebenkeulen zu vermeiden sind. Eine breite Hauptkeule und Nebenkeulen sind oft mit dem Nachteil verbunden, dass die in ihrem Randbereich abgestrahlten Signale an Einbauteilen oder Rohr- bzw. Behältniswandungen reflektiert werden und das eigentliche Nutzsignal stören.

US 3 891 869 A beschreibt einen Ultraschallwandler für ein Ultraschalldurchflussmessgerät mit einem Wandlerelement in einem Wandlergehäuse und mit einem Abstrahlelement.

Demnach liegt der Erfindung die Aufgabe zugrunde, einen Ultraschallwandler anzugeben, der trotz geringer Abmessungen eine gute Richtwirkung erzielt.

Die Aufgabe ist bei dem erfindungsgemäßen Ultraschallwandler zunächst und im Wesentlichen dadurch gelöst, dass das Abstrahlelement über ein Verbindungselement mit dem Wandlergehäuse verbunden ist und an seinem Umfang an der Stirnseite frei stehend ist, derart, dass es an dem Umfang frei schwingen kann.

Durch die erfindungsgemäße konstruktive Maßnahme, dass das Abstrahlelement an seinem Umfang frei schwingen kann, wird die Apertur des Ultraschallwandlers gegenüber bekannten Konstruktionen erheblich vergrößert. Aus dem Stand der Technik ist bekannt, dass das Abstrahlelement an seinem Umfang rundum mit dem Gehäuse verbunden ist und daher nur zentral schwingen kann, ähnlich einer über den Umfang außenseitig gefassten Schwingungsmembran bei einer Trommel. Dadurch, dass das Abstrahlelement nicht mehr umfangseitig fixiert ist, ist es ihm möglich, mit seiner vollständigen Stirnfläche zu schwingen, wodurch die gesamte Stirnfläche gleichermaßen zur Ultraschallerzeugung und -abstrahlung beitragen kann. Dadurch wird die wirksame Apertur des Ultraschallwandlers erheblich vergrößert, bei unveränderter Größe der Stirnfläche und ohne dass der Außendurchmesser des Ultraschallwandlers vergrößert werden müsste. Es resultiert ein Ultraschallwandler mit einer deutlich verbesserten Richtwirkung.

Die Ausgestaltung des erfindungsgemäßen Ultraschallwandlers ist so ausgebildet, dass das Abstrahlelement als Kolben ausgebildet ist, wobei der Kolben einen Kolbenschaft und eine Kolbenplatte aufweist, wobei die Kolbenplatte die Stirnfläche umfasst und wobei sich der Kolben zumindest teilweise außerhalb des Wandlergehäuses erstreckt. Der Kolbenschaft weist bevorzugt ein erstes Ende und ein zweites Ende auf, wobei bevorzugt an dem ersten Ende das Wandlerelement angeordnet ist und an dem zweiten Ende die Kolbenplatte angeordnet ist. Das Wandlerelement beaufschlagt den Kolben an dem ersten Ende des Kolbenschafts mit Ultraschallsignalen, die den Kolben durchlaufen und an der Stirnseite der Kolbenplatte in die Umgebung abgestrahlt werden. Erfindungsgemäß ist der Kolben so ausgeführt und angeordnet, dass die gesamte Kolbenplatte außerhalb des Wandlergehäuses angeordnet ist. Des Weiteren weist die Kolbenplatte bevorzugt einen größeren Durchmesser als der Kolbenschaft auf. Weiter bevorzugt entspricht die Mittelachse des Kolbenschafts der Mittelachse der Kolbenplatte. Dadurch, dass die Kolbenplatte außerhalb des Wandlergehäuses angeordnet ist, kann der Durchmesser der Kolbenplatte auch größer als der Durchmesser des Wandlergehäuses gewählt werden. Die Ausgestaltung der Kolbenplatte ist demnach nicht abhängig von der Ausgestaltung des Wandlergehäuses, so dass die Realisierung einer größeren Abstrahlfläche - also der Stirnfläche - ohne Weiteres ermöglicht ist.

Eine erfindungsgemäße Ausführungsform zeichnet sich dadurch aus, dass der Kolbenschaft zumindest teilweise in das Wandlergehäuse hineinragt. Bevorzugt ragt der Kolbenschaft dann zentriert in das Wandlergehäuse hinein, hat also an seinem Rand umlaufend im Wesentlichen den gleichen Abstand zum Wandlergehäuse. Im Wesentlichen deshalb, weil der Kolbenschaft verschieden ausgebildet sein kann. So sieht eine bevorzugte Ausgestaltung des erfindungsgemäßen Ultraschallwandlers vor, dass der Kolbenschaft säulenförmig ausgebildet ist. Eine Ausgestaltung des erfindungsgemäßen Ultraschallwandlers ist dadurch gekennzeichnet, dass der Kolbenschaft einen runden, einen rechteckigen oder einen vieleckigen Querschnitt aufweist.

Das Verbindungselement ist so angeordnet, dass es in einer Ausgestaltung den Kolbenschaft mit dem Wandlergehäuse verbindet. Dadurch wird gewährleistet, dass die Kolbenplatte vollkommen frei schwingen kann und nicht durch das Verbindungselement gestört oder die Schwingungen durch das Verbindungselement gedämpft werden. In einer weiteren Ausgestaltung hingegen ist vorgesehen, dass das Verbindungselement die Kolbenplatte mit dem Wandlergehäuse verbindet. Da erfindungsgemäß vorgesehen ist, dass das Abstrahlelement an seiner Stirnseite, die die abstrahlende Stirnfläche umfasst, frei schwingen kann, ist das Verbindungselement nicht am äußeren Rand mit der Kolbenplatte verbunden, vielmehr ist die Verbindung in der Kolbenplattenmitte realisiert.

Eine weitere Ausgestaltung des erfindungsgemäßen Ultraschallwandlers ist dadurch gekennzeichnet, dass das Verbindungselement als Membran ausgestaltet ist. Die Membran weist eine geringe Dicke auf und umgibt das Abstrahlelement bevorzugt um seinen gesamten Umfang. Weiter bevorzugt ist diese Membran elastisch.

Wie oben ausgeführt, weist der Ultraschallwandler bzw. die schwingfähigen Elemente des Ultraschallwandlers - wie praktisch jedes schwingfähige System - verschiedene Schwingungsmoden auf. In einem bevorzugten Ausführungsbeispiel ist der Ultraschallwandler so ausgelegt, dass im Grundschwingungsmode im Wesentlichen das Verbindungselement die Schwingungen ausführt, während das Abstrahlelement im Wesentlichen starr ist. Das Abstrahlelement bewegt sich also in Gänze gegenüber dem Gehäuse, mit dem es über das Verbindungselement verbunden ist. Die Eigenfrequenz des Ultraschallwandlers ist hierbei proportional zu der Steifigkeit der Membran und umgekehrt proportional zu der Masse des Abstrahlelementes, insbesondere des Kolbens. Um eine niedrige Grundeigenfrequenz - Eigenfrequenz des Grundschwingungsmode - zu realisieren, die sich insbesondere bei der Vermessung gasförmiger Medien als vorteilhaft erweist, ist in einer Ausführungsform also vorgesehen, die Steifigkeit der des Verbindungselements, beispielsweise in Form einer Membran, zu verringern. Dies wird erfindungsgemäß dadurch realisiert, dass die Membranfläche, also die Fläche des als Membran ausgestalteten Verbindungselements, vergrößert wird.

Um eine größere Membranfläche zu realisieren, ist demnach in einer bevorzugten Ausgestaltung vorgesehen, dass die Membran wellenförmig ausgebildet ist. Wellenförmig ist hierbei so zu verstehen, dass die Membran Erhebungen und/oder Vertiefungen aufweist, die jedoch beispielsweise auch als Stufen realisiert sein können, also durch Kanten gebildet sein können.

Eine zusätzliche oder auch für sich stehende Möglichkeit, die Membranfläche zu vergrößern ist in einer besonders bevorzugten Ausgestaltung des erfindungsgemäßen Ultraschallwandlers dadurch realisiert, dass der Kolbenschaft einen sich zu der dem Wandlerelement abgewandten Seite zumindest teilweise verjüngenden Querschnitt aufweist. Besonders bevorzugt ist der Kolbenschaft als akustisches Horn geformt. Die Membran greift dann bevorzugt an der Stelle mit dem geringsten Querschnitt an. Die Ausgestaltung des Kolbenschaftes als akustisches Horn hat jedoch nicht nur den Effekt der Membranflächenvergrößerung. Vielmehr - und auch für sich stehend vorteilhaft - wird durch eine Ausgestaltung des Kolbenschafts als akustisches Horn eine Anpassung der Impedanz des Kolbens an die Impedanz des zu vermessenden Mediums realisiert. Das akustische Horn agiert demnach als akustischer Transformator.

Eine bevorzugte Ausgestaltung des erfindungsgemäßen Ultraschallwandlers ist dadurch gekennzeichnet, dass das Wandlergehäuse und das Verbindungselement und/oder das Verbindungselement und das Abstrahlelement aus einem Stück gefertigt sind. dazu ist nicht jede Geometrie der verschiedenen Bereiche des Ultraschallwandlers geeignet, insbesondere rotationssymmetrische Geometrien mit zylindrischen Grundelementen, vorzugsweise ohne Hinterscheidungen, bieten sich hier an.

Um eine Fertigung zu vereinfachen oder auch um kompliziertere Geometrien realisieren zu können, ist in einer weiteren bevorzugten Ausgestaltung des erfindungsgemäßen Ultraschallwandlers vorgesehen, dass das Wandlergehäuse und das Verbindungselement und/oder das Verbindungselement und das Abstrahlelement miteinander verschweißt sind. Die einzelnen Teile können also unabhängig voneinander gefertigt werden und werden erst dann zusammengefügt, was vorteilhaft sein kann.

Um die Schwingungen zu kontrollieren, ist in einer Ausgestaltung des erfindungsgemäßen Ultraschallwandlers vorgesehen, dass ein elastisches Material zwischen dem Abstrahlelement und dem Verbindungselement angeordnet ist. das elastische Material soll selbstverständlich für die zu unterdrückenden Frequenzen mechanisch dämpfend sein, so dass eine Dämpfung bewirkt wird, die sich insbesondere auf höhere Schwingungsmoden auswirkt.

Das elastische Material kann beispielsweise durch eine elastische Masse realisiert sein, die in den Zwischenraum gefüllt ist. Besonders bevorzugt ist das elastische Material durch mindestens einen schwingungsdämpfenden O-Ring realisiert.

Im Einzelnen gibt es eine Vielzahl von Möglichkeiten, den erfindungsgemäßen Ultraschallwandler auszugestalten und weiterzubilden. Dazu wird verwiesen auf die dem Patentanspruch 1 nachgeordneten Patentansprüche in Verbindung mit der Zeichnung. In der Zeichnung zeigen
- Fig. 1a: einen klassischen Ultraschallwandler aus dem Stand der Technik im statischen Zustand,
- Fig. 1b: den in Fig. 1a dargestellten Ultraschallwandler im dynamischen Zustand,
- Fig. 2a: eine erste Ausgestaltung eines erfindungsgemäßen Ultraschallwandlers im statischen Zustand bzw. im Zustand einer Grundschwingung,
- Fig, 2b: den in Fig. 2a dargestellten Ultraschallwandler im dynamischen Zustand in einem höheren Schwingungsmode,
- Fig. 3: eine zweite Ausgestaltung eines erfindungsgemäßen Ultraschallwandlers mit einem elastischen Element,
- Fig. 4: eine dritte Ausgestaltung eines erfindungsgemäßen Ultraschallwandlers, bei dem der Kolbenschaft vorteilhaft geformt ist,
- Fig. 5: den Ultraschallwandler aus Fig. 4 mit einer wellenförmig ausgebildeten Membran als Verbindungselement und
- Fig. 6: eine fünfte Ausgestaltung des erfindungsgemäßen Ultraschallwandlers.

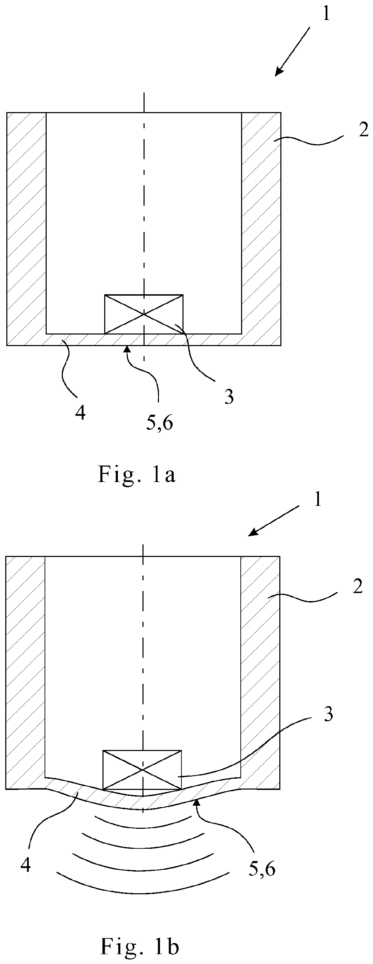

In Fig. 1a dargestellt ist ein aus dem Stand der Technik bekannter Ultraschallwandler 1 in vereinfachter Darstellung. Der Ultraschallwandler 1 umfasst ein Wandlergehäuse 2 und ein Wandlerelement 3. Durch das Wandlerelement 3 werden Ultraschallsignale erzeugt und über ein Abstrahlelement 4, hier realisiert als Ultraschallfenster, in die an den Ultraschallwandler 1 angrenzende Umgebung abgestrahlt. Die Abstrahlung erfolgt über die Stirnfläche 5 des Abstrahlelements 4.

In Fig. 1b ist ein dynamischer Zustand des Ultraschallwandlers 1 dargestellt. Die Ultraschallsignale werden über die Stirnfläche 5 abgestrahlt. Wie in der Fig. 1b deutlich zu sehen ist, schwingt die Stirnfläche 5 des aus dem Stand der Technik bekannten Ultraschallwandlers 1 nur zentral, da das Abstrahlelement 4 an über seinen gesamten Umfang mit dem Wandlergehäuse 2 verbunden ist. Durch die mechanische Randbedingung der Fixierung des Abstrahlelements 4 ist vorgezeichnet, dass das Abstrahlelement 4 seine größte Schwingungsamplitude stets in seinem zentralen Bereich aufweist, wobei die Schwingungsamplitude zum Umfang des Abstrahlelements 4 abnimmt.

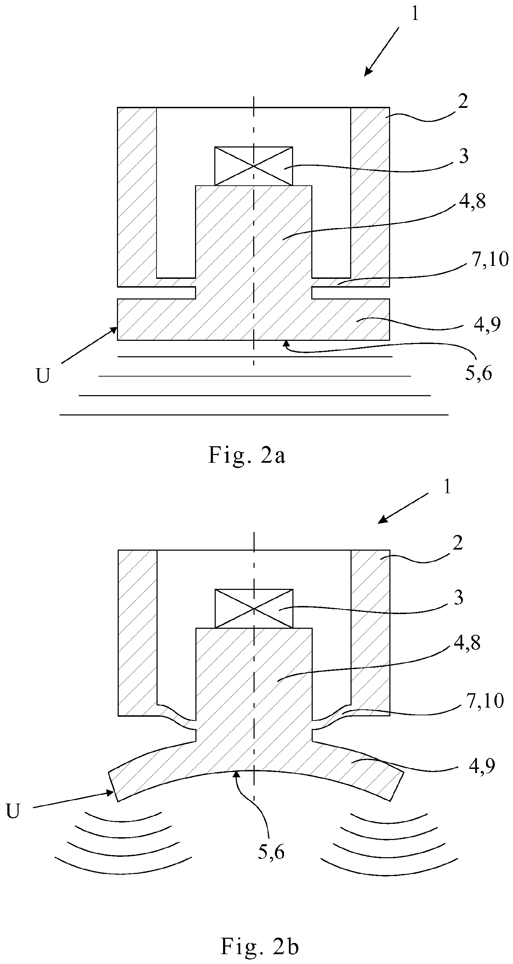

Fig. 2a zeigt einen erfindungsgemäßen Ultraschallwandler 1. Der Ultraschallwandler 1 weist ein Wandlergehäuse 2 und ein Wandlerelement 3 auf. Das Wandlerelement 3 erzeugt Ultraschallsignale und überträgt sie auf ein Abstrahlelement 4. Die Signale werden dann über die Stirnfläche 5 an der Stirnseite 6 des Abstrahlelements 4 in die an den Ultraschallwandler 1 angrenzende Umgebung abgestrahlt. Beschrieben wird auch im Weiteren der Ultraschallwandler 1 als Sender, jedoch ist auch die Benutzung desselben Ultraschallwandlers 1 als Empfänger möglich. Dann nimmt das Abstrahlelement 4 über seine Stirnfläche 5 an der Stirnseite 6 Ultraschallsignale aus der Umgebung auf und überträgt sie auf das Wandlerelement 3, was hier durch ein Piezoelement realisiert ist. So können zwanglos aufgenommene mechanische Schwingungen in elektrische Signale gewandelt werden.

Das Abstrahlelement 4 ist über ein Verbindungselement 7 mit dem Wandlergehäuse 2 verbunden. Das Verbindungselement 7 ist als elastische, schwingfähige Membran 10 ausgestaltet.

Das Verbindungselement 7 ist so mit dem Abstrahlelement 4 verbunden, dass das Abstrahlelement 4 an seinem Umfang U an der Stirnseite 6 frei stehend ist und an seinem Umfang U frei schwingen kann. Damit ist gemeint, dass das Abstrahlelement 4 an seinem Umfang U frei beweglich ist und der Umfang U des Abstrahlelementes 4 jedenfalls nicht gehindert ist, eine Bewegung des gesamten Abstrahlelements 4 mitzuvollziehen. Dadurch, dass das Abstrahlelement 4 nicht mehr umfangseitig fixiert ist, ist es ihm möglich, mit seiner vollständigen Stirnfläche 5 zu schwingen, wodurch die gesamte Stirnfläche 5 gleichermaßen zur Ultraschallerzeugung und -abstrahlung beitragen kann. Dadurch wird die wirksame Apertur des Ultraschallwandlers 1 erheblich vergrößert, bei unveränderter Größe der Stirnfläche 5 und ohne dass der Außendurchmesser des Ultraschallwandlers 1 vergrößert werden müsste. Dies wird besonders deutlich im direkten Vergleich der Fig. 1 und 2. In Fig. 2 resultiert ein Ultraschallwandler 1 mit einer deutlich verbesserten Richtwirkung, da über den gesamten Bereich der Stirnfläche 5 parallele Wellenfronten erzeugt werden können, was bei dem Ultraschallwandler 1 gemäß Fig. 1 prinzipbedingt nicht möglich ist.

Das Abstrahlelement 4 selbst ist als Kolben ausgestaltet und weist einen Kolbenschaft 8 und einen Kolbenteller 9 auf. Der Kolbenschaft 8 reicht in das Wandlergehäuse 2 hinein, wohingegen der Kolbenteller 9 außerhalb des Wandlergehäuses 2 angeordnet ist. Hierdurch wird ermöglicht, dass der Kolbenteller 9 sogar einen größeren Durchmesser aufweisen kann, als der Innendurchmesser des Gehäuses 2 ist. So ist die Größe der Stirnfläche 5 unabhängig von den Dimensionen des Wandlergehäuses 2. Jedoch ergeben sich auch dann Vorteile, wenn die Stirnfläche 5 nicht größer gewählt wird als der Innendurchmesser des Gehäuses 2, was an der freien Beweglichkeit des Umfangs U des Abstrahlelements 4 im Bereich des Kolbentellers 9 liegt.

In Fig. 2a ist angedeutet, wie sich durch die Konstruktion gerade, parallele Phasenfronten der Ultraschallschwingungen realisieren lassen, die mit einer hervorragenden Richtwirkung einhergehen.

Fig. 2b zeigt den in Fig. 2a dargestellten Ultraschallwandler 1 im dynamischen Zustand in einem höheren Schwingungsmode, der gleichzeitig mit dem Grundschwingungsmode angeregt werden kann. Dargestellt sind also zwei sich überlagernde Schwingungsmoden des Ultraschallwandlers 1. In dem ersten Mode wird im Wesentlichen die Membran 10 ausgelenkt, bzw. zu Schwingungen angeregt, in dem zweiten Mode schwingt im Wesentlichen der Kolbenteller 9 in sich. In der schematischen Fig. 2b ist dies überzeichnet dargestellt anhand des gebogenen Kolbentellers 9, dessen Umfangsbereich U gegenüber dem zentralen Bereich des Kolbentellers 9 nach unten ausgelenkt ist.

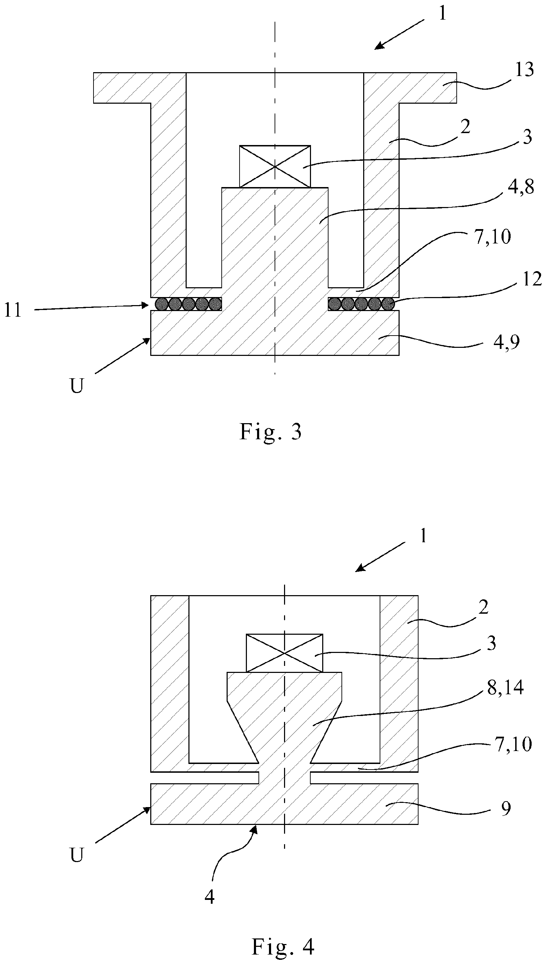

In Fig. 3 ist eine Ausgestaltung des erfindungsgemäßen Ultraschallwandlers 1 dargestellt, bei der in dem Bereich 11 zwischen dem als Membran 10 ausgestalteten Verbindungselement 7 und dem Kolbenteller 9 O-Ringe 12 angeordnet sind. Die O-Ringe dienen insbesondere dazu, nicht durch das Wandlerelement 3 unmittelbar angeregte Oberschwingungen zu dämpfen.

Des Weiteren weist der Ultraschallwandler 1 einen Flansch 13 zur Befestigung des Ultraschallwandlers 1 auf.

Die Eigenfrequenz des Ultraschallwandlers 1 ist proportional zu der Steifigkeit des als Membran 10 ausgestalteten Verbindungselements 7. Um die Steifigkeit der Membran 10 zu verringern, und damit die Eigenfrequenz des Ultraschallwandlers 1 zu niedrigeren Frequenzen zu verschieben, weist die in Fig. 4 dargestellte Ausführungsform des Ultraschallwandlers einen als akustisches Horn 14 ausgeformten Kolbenschaft 8 auf. Der Kolbenschaft 9 verjüngt sich zu seiner dem Wandlerelement 3 abgewandten Seite hin. Die Membran 10 ist an der Stelle mit dem geringsten Durchmesser mit dem Kolbenschaft 8 verbunden. dadurch wird die bewegliche Fläche der Membran 10 des Verbindungselements 7 konstruktiv vergrößert.

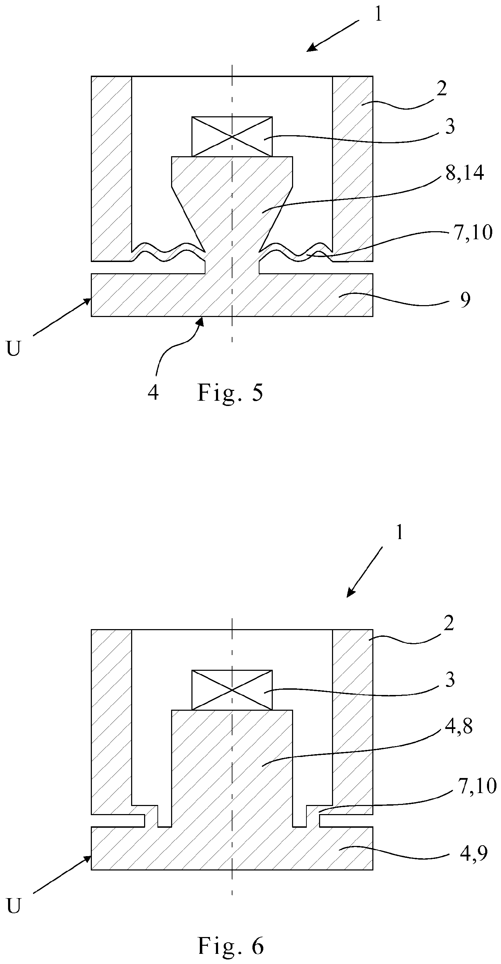

Die in Fig. 5 dargestellte Ausführungsform des Ultraschallwandlers 1 unterscheidet sich von der in Fig. 4 dargestellten Ausführungsform dadurch, dass die Membran 10 wellig ausgebildet ist. Hierdurch wird die Elastizität der Membran 10 noch weiter vergrößert bzw. die Steifigkeit der Membran 10 weiter verringert, was in einer im Vergleich zu der Ausführungsform in Fig. 4 niedrigeren Grundeigenfrequenz resultiert.

Fig. 6 zeigt einen Ultraschallwandler 1, bei dem die Membran nicht mit dem Kolbenschaft 8, sondern mit dem Kolbenteller 9 verbunden ist. Der Kolbenteller 9 ist an seinem Umfang U dennoch frei stehend, so dass er frei schwingen kann.

### Bezugszeichen

- 1: Ultraschallwandler
- 2: Wandlergehäuse
- 3: Wandlerelement
- 4: Abstrahlelement
- 5: Stirnfläche des Abstrahlelements
- 6: Stirnseite des Abstrahlelements
- 7: Verbindungselement
- 8: Kolbenschaft
- 9: Kolbenteller
- 10: Membran als Verbindungselement
- 11: Bereich zwischen der Membran und dem Kolbenteller
- 12: O-Ringe
- 13: Flansch
- 14: akustisches Horn
- U: Umfang des Abstrahlelements

## Patentansprüche

1. Ultraschallwandler (1) für ein Ultraschalldurchflussmessgerät, mit einem Wandlergehäuse (2), mit einem Wandlerelement (3) zur Erzeugung und/oder zum Empfangen von Ultraschallsignalen und mit einem Abstrahlelement (4), wobei das Abstrahlelement (4) von dem Wandlerelement (3) zumindest mittelbar mit Ultraschallsignalen beaufschlagt wird und die Ultraschallsignale über eine Stirnfläche (5) an einer Stirnseite (6) des Abstrahlelements (4) in die an den Ultraschallwandler (1) grenzende Umgebung abstrahlt und/oder das Abstrahlelement (4) Ultraschallsignale über eine Stirnfläche (5) an einer Stirnseite (6) des Abstrahlelements (4) aus der Umgebung aufnimmt und zumindest mittelbar auf das Wandlerelement (3) überträgt, wobei das Abstrahlelement (4) über ein Verbindungselement (7) mit dem Wandlergehäuse (2) verbunden ist und an seinem Umfang (U) an der Stirnseite (6) frei stehend ist, derart, dass es an dem Umfang (U) frei schwingen kann, wobei das Abstrahlelement (4) als Kolben ausgebildet ist, wobei der Kolben einen Kolbenschaft (8) und eine Kolbenplatte (9) aufweist, wobei die Kolbenplatte (9) die Stirnfläche (5) umfasst und wobei sich der Kolben zumindest teilweise außerhalb des Wandlergehäuses (2) erstreckt,
wobei der Kolbenschaft (8) zumindest teilweise in das Wandlergehäuse (2) hineinragt **dadurch gekennzeichnet, dass** der Kolben so ausgeführt und angeordnet ist, dass die gesamte Kolbenplatte außerhalb des Wandlergehäuses angeordnet ist.

2. Ultraschallwandler (1) nach Anspruch 1, **dadurch gekennzeichnet, dass** der Kolbenschaft (8) säulenförmig ausgebildet ist.

3. Ultraschallwandler (1) nach Anspruch 1 oder 2, **dadurch gekennzeichnet, dass** der Kolbenschaft (8) einen runden, einen rechteckigen oder einen vieleckigen Querschnitt aufweist.

4. Ultraschallwandler (1) nach einem der Ansprüche 1 bis 3, **dadurch gekennzeichnet, dass** das Verbindungselement (7) als Membran (10) ausgestaltet ist.

5. Ultraschallwandler (1) nach Anspruch 4, **dadurch gekennzeichnet, dass** die Membran (10) wellenförmig ausgebildet ist.

6. Ultraschallwandler (1) nach einem der Ansprüche 1 bis 5, **dadurch gekennzeichnet, dass** der Kolbenschaft (8) einen sich zu der dem Wandlerelement (3) abgewandten Seite verjüngenden Querschnitt aufweist, insbesondere als akustisches Horn (14) geformt ist.

7. Ultraschallwandler (1) nach einem der Ansprüche 1 bis 6, **dadurch gekennzeichnet, dass** das Wandlergehäuse (2) und das Verbindungselement (7) und/oder das Verbindungselement (7) und das Abstrahlelement (4) aus einem Stück gefertigt sind.

8. Ultraschallwandler (1) nach einem der Ansprüche 1 bis 7, **dadurch gekennzeichnet, dass** das Wandlergehäuse (2) und das Verbindungselement (7) und/oder das Verbindungselement (7) und das Abstrahlelement (4) miteinander verschweißt sind.

9. Ultraschallwandler (1) nach einem der Ansprüche 1 bis 8, **dadurch gekennzeichnet, dass** ein elastisches Material zwischen dem Abstrahlelement (4) und dem Verbindungselement (7) angeordnet ist.

10. Ultraschallwandler (1) nach Anspruch 9, **dadurch gekennzeichnet, dass** das elastische Material durch mindestens einen O-Ring (12) realisiert ist.

## Claims

1. An ultrasonic transducer (1) for an ultrasonic flow meter, comprising a transducer housing (2), comprising a transducer element (3) for at least one of generating and/or receiving ultrasonic signals and comprising an emitting element (4), wherein the emitting element (4) is exposed to ultrasonic signals at least indirectly from the transducer element (3) and emits the ultrasonic signals via an end face (5) on a front side (6) of the emitting element (4) into the surroundings bordering the ultrasonic transducer (1) and/or the emitting element (4) picks up ultrasonic signals from the surroundings via the end face (5) on the front side (6) of the emitting element (4) and transmits them at least indirectly to the transducer element (3), wherein the emitting element (4) is connected to the transducer housing (2) via a connecting element (7) and peripherally stands free on the front side (6) such that it can oscillate freely on the periphery (U), wherein the emitting element (4) is designed as a plunger, wherein the plunger has a plunger shaft (8) and a plunger plate (9), wherein the plunger plate (9) encompasses the end face (5) and wherein the plunger extends at least partially outside the transducer housing (2), wherein the plunger shaft (8) projects at least partially into the transducer housing (2), **characterized in**
the plunger is designed and arranged such that the entire plunger plate is located outside of the transducer housing.

2. Ultrasonic transducer (1) according to claim 1, **characterized in that** the plunger shaft (8) is columnar.

3. Ultrasonic transducer (1) according to claim 1 or 2, **characterized in that** the plunger shaft (8) has a cross section that is round, rectangular or polygonal.

4. Ultrasonic transducer (1) according to any one of claims 1 to 3, **characterized in that** the connecting element (7) is a membrane (10).

5. Ultrasonic transducer (1) according to claim 4, **characterized in that** the membrane (10) is corrugated.

6. Ultrasonic transducer (1) according to any one of claims 1 to 5, **characterized in that** the plunger shaft (8) has a cross section which tapers away from the transducer element (3), in particular, is shaped as an acoustic horn (14).

7. Ultrasonic transducer (1) according to any one of claims 1 to 6, **characterized in that** the transducer housing (2) and the connecting element (7) and/or the connecting element (7) and the emitting element (4) have a one piece construction.

8. Ultrasonic transducer (1) according to any one of claims 1 to 7, **characterized in that** the transducer housing (2) and the connecting element (7) and/or the connecting element (7) and the emitting element (4) are welded to one another.

9. Ultrasonic transducer (1) according to any one of claims 1 to 8, **characterized in that** an elastic material is provided between the emitting element (4) and the connecting element (7).

10. Ultrasonic transducer (1) according to claim 9, **characterized in that** the elastic material is formed by at least one O-ring (12).

## Revendications

1. Transducteur d'ultrasons (1) pour un débitmètre à ultrasons, comprenant un boîtier de transducteur (2), comprenant un élément transducteur (3) destiné à générer et/ou à recevoir des signaux ultrasonores et comprenant un élément rayonnant (4), l'élément rayonnant (4) étant alimenté au moins indirectement par l'élément transducteur (3) avec des signaux ultrasonores et rayonnant les signaux ultrasonores par le biais d'une surface frontale (5) au niveau d'un côté frontal (6) de l'élément rayonnant (4) dans l'environnement attenant au transducteur d'ultrasons (1) et/ou l'élément rayonnant (4) recevant des signaux ultrasonores en provenance de l'environnement par le biais d'une surface frontale (5) au niveau d'un côté frontal (6) de l'élément rayonnant (4) et les transmettant au moins indirectement à l'élément transducteur (3), l'élément rayonnant (4) étant relié au boîtier de transducteur (2) par le biais d'un élément de liaison (7) et étant dégagé sur son pourtour (U) au niveau du côté frontal (6) de telle sorte qu'il peut osciller librement au niveau du pourtour (U), l'élément rayonnant (4) étant réalisé sous la forme d'un piston, le piston possédant une tige de piston (8) et un plateau de piston (9), le plateau de piston (9) comprenant la surface frontale (5) et le piston s'étendant au moins partiellement à l'extérieur du boîtier de transducteur (2),
la tige de piston (8) faisant au moins partiellement saillie à l'intérieur du boîtier de transducteur (2), **caractérisé en ce**
**que** le piston est réalisé et disposé de telle sorte que le plateau de piston complet est disposé à l'extérieur du boîtier de transducteur.

2. Transducteur d'ultrasons (1) selon la revendication 1, **caractérisé en ce que** la tige de piston (8) est réalisée en forme de colonne.

3. Transducteur d'ultrasons (1) selon la revendication 1 ou 2, **caractérisé en ce que** la tige de piston (8) présente une section transversale ronde, rectangulaire ou polygonale.

4. Transducteur d'ultrasons (1) selon l'une des revendications 1 à 3, **caractérisé en ce que** l'élément de liaison (7) est réalisé sous la forme d'une membrane (10) .

5. Transducteur d'ultrasons (1) selon la revendication 4, **caractérisé en ce que** la membrane (10) est configurée ondulée.

6. Transducteur d'ultrasons (1) selon l'une des revendications 1 à 5, **caractérisé en ce que** la tige de piston (8) présente une section transversale qui se rétrécit vers le côté à l'opposé de l'élément transducteur (3), notamment est réalisée sous la forme d'un cornet acoustique (14).

7. Transducteur d'ultrasons (1) selon l'une des revendications 1 à 6, **caractérisé en ce que** le boîtier de transducteur (2) et l'élément de liaison (7) et/ou l'élément de liaison (7) et l'élément rayonnant (4) sont fabriqués d'un seul tenant.

8. Transducteur d'ultrasons (1) selon l'une des revendications 1 à 7, **caractérisé en ce que** le boîtier de transducteur (2) et l'élément de liaison (7) et/ou l'élément de liaison (7) et l'élément rayonnant (4) sont soudés l'un à l'autre.

9. Transducteur d'ultrasons (1) selon l'une des revendications 1 à 8, **caractérisé en ce qu'**un matériau élastique est disposé entre l'élément rayonnant (4) et l'élément de liaison (7).

10. Transducteur d'ultrasons (1) selon la revendication 9, **caractérisé en ce que** le matériau élastique est réalisé par au moins un joint torique (12) .
